# EUROPÄISCHE PATENTANMELDUNG

(11) **EP 0 950 586 A2**
(43) Veröffentlichungstag der Anmeldung: **20.10.1999**
(21) Anmeldenummer: 99105220.0
(22) Anmeldetag: 13.03.1999
(51) Int. Cl.: B60S 1/04

(54) **Befestigungsvorrichtung für eine Wischanlage, insbesondere eines Kraftfahrzeugs**

(30) Priorität: 18.04.1998 DE 19817289
(71) Anmelder: ITT MANUFACTURING ENTERPRISES, INC., Wilmington, Delaware 19801 (US)
(72) Erfinder: Egner-Walter, Bruno, 74076 Heilbronn (DE)
(74) Vertreter: Dreiss, Fuhlendorf, Steimle & Becker, Patentanwälte

(57) **Zusammenfassung**

Zur raschen, problemlosen und sicheren Befestigung einer vormontierten Scheibenwischerantriebseinrichtung an einem Kraftfahrzeug wird an jeder Befestigungsstelle eine Befestigungsvorrichtung anbracht, die an der Wischanlage vormontiert werden kann. Jede Befestigungsvorrichtung ist mit einem drehbaren Befestigungselement (6) versehen, welches zwei nach entgegengesetzten Richtungen vorstehende Riegelelemente (7, 8) aufweist. Sie untergreifen in der Montageendstellung die Karosserie oder einen daran angebrachten Kalter (1) im Bereich eines Montagedurchbruchs (2). Nach dem Durchstecken der Riegelelemente (7, 8) durch entsprechende radiale Durchtrittsschlitze (3, 4) des Halters (1) oder der Karosserie wird das Befestigungselement (6) bei zwei Riegelelementen um 90° gedreht, wodurch dann letztere in kerbenartige Verrastausprägungen (21, 22) der Karosserie bzw. des daran befestigten Halters (1) einrasten. Für eine federelastische Anpressung der Riegelelemente (7, 8) sorgt ein Dämpfungskörper (13), der darüber hinaus auch die notwendige Dämpfung der Wischanlage gewährleistet.

## Beschreibung

Die Erfindung bezieht sich auf eine Befestigungsvorrichtung für eine Wischanlage, insbesondere eines Kraftfahrzeugs, gemäß dem Oberbegriff des Anspruchs 1.

Bei der Wischanlage handelt es sich in aller Regel um eine vormontierte Scheibenwischerantriebseinrichtung, die an hierfür vorgesehenen Stellen in der vorgesehenen Weise an der Karosserie eines Kraftfahrzeugs befestigt wird. Die Befestigung muß problemlos möglich sein und soll keinen besonderen Zeitaufwand erfordern. Die vormontierte Scheibenwischerantriebseinrichtung umfaßt nicht nur einen Antriebsmotor, sondern auch ein komplettes Gestänge. Falls es sich um eine Scheibenwischanlage für die Frontscheibe handelt, weist sie meistens zwei antreibbare Wischerwellen auf, die über eine Antriebskurbel und ein Koppelgestänge reversierend antreibbar sind.

Bei einer vorbekannten "Scheibenwischerantriebseinrichtung für Kraftkraftfahrzeuge" (DE 40 36 367 A1) wird die vormontierte Scheibenwischerantriebseinrichtung beispielsweise mit drei Befestigungsabschnitten an der Karosserie bzw. mit der Karosserie verbundenen Teilen befestigt und zwar jeweils im Bereich der Wischerwellen und zum dritten im Bereich des Antriebsmotors. In einem solchen Falle sind demnach drei der gattungsgemäßen Befestigungsvorrichtungen vorhanden bzw. notwendig.

Der elastische Dämpfungskörper der Befestigungsvorrichtung ist bevorzugterweise ein hohlzylindrisch ausgebildetes elastomeres Dämpfungselement, welches unverlierbar am Befestigungsabschnitt der Wischanlage gehalten ist und der zur schwingungsdämpfenden Befestigung der Scheibenwischerantriebseinrichtung an der Karosserie dient. Er kann aus Gummi oder einem thermoplastischen Kautschuk hergestellt werden.

Die vorbekannte Befestigungsvorrichtung wird mit Hilfe einer Befestigungsschraube am jeweils vorgesehenen Karosserieteil befestigt. Obwohl zur Montageerleichterung bei der Scheibenwischerantriebseinrichtung gemäß DE 40 36 367 A1 die Befestigungsschrauben unverlierbar in dem Dämpfungselement gehalten sind, müssen sie in das entsprechende Gewinde eingeführt und eingedreht werden. Dadurch ist die Montage ist verhältnismäßig aufwendig und erfordert eine gewisse Geschicklichkeit des ausführenden Monteurs.

Es liegt infolgedessen die Aufgabe vor, eine gattungsgemäße Befestigungsvorrichtung so weiterzubilden, daß sich die Montage vereinfachen und gleichzeitig auch beschleunigen läßt. Außerdem soll die Montage nicht von der Geschicklichkeit des Monteurs abhängig sein.

Zur Lösung dieser Aufgabe wird erfindungsgemäß vorgeschlagen, daß die gattungsgemäße Befestigungsvorrichtung die Kennzeichnungsmerkmale des Anspruchs 1 aufweist.

Ein wesentliches Element dieser Befestigungsvorrichtung ist der drehbare Riegel, der an der vormontierten Scheibenwischerantriebseinrichtung bereits unverlierbar gehalten ist. Um Mißverständnisse auszuschalten, wird darauf hingewiesen, daß bei einer Scheibenwischerantriebseinrichtung in der Regel mehr als nur eine solche Befestigungsvorrichtung und damit natürlich auch mehr als nur eine drehbarer Riegel vorhanden sind, beispielsweise drei. Diese Befestigungsvorrichtung erlaubt das Aufsetzen der gesamten Scheibenwischerantriebseinrichtung auf der Karosserie oder einem daran im Bereich jedes Riegels angebrachten Halters, wobei letzterer bzw. die Karosserie im Bereich des Halters das Durchstecken des zugeordneten Riegelendes gestattet, so daß die Riegelelemente anschließend lediglich noch von ihrer Montagedrehstellung in ihre Halte-Drehstellung gedreht werden müssen. Damit ist dann die Montage der Scheibenwischerantriebseinrichtung auch schon abgeschlossen. Hieraus folgt, daß der Halter oder die Ausbildung der Karosserie an der Befestigungsstelle quasi Bestandteil der Befestigungsvorrichtung ist. Das Verriegeln an jeder Befestigungsstelle ist mit einem Bajonettverschluß vergleichbar. Die Dimensionierung der einzelnen an der Befestigung unmittelbar beteiligten Elemente ist so zu wählen, daß nach der Betätigung der Verriegelung, also dem Drehen des Riegels, vorzugsweise um 90°, der Dämpfungskörper axial etwas gestaucht wird, um ein unbeabsichtigtes Lösen der Verriegelung zu verhindern und gleichzeitig auch die schwingungsdämpfende Befestigung der Scheibenwischerantriebseinrichtung zu gewährleisten. Die Demontage erfolgt selbstverständlich in umgekehrter Weise, d. h. durch Zurückdrehen oder je nach Ausbildung auch durch Weiterdrehen des Riegels bzw. Befestigungselements um einen entsprechenden Winkelbetrag, vorzugsweise um 90°.

Bevorzugterweise sind am Riegel diametral gegenüberliegend zwei radial abstehende Riegelelemente vorgesehen. Obwohl hier die Drehung in Verriegelungsstellung bzw. Entriegelungsstellung um einen von 90° abweichenden Winkelbetrag erfolgen kann, wird für eine sichere und leicht auffindbare Verriegelungs- bzw. Entriegelungsstellung für die erforderliche Verdrehung ein Winkelbetrag von 90° bevorzugt. Falls man jedoch mehrere solche Riegelelemente vorsehen möchte, beispielsweise vier, so ist eine entsprechend kürzere Verriegelungs- bzw. Entriegelungs-Drehbewegung notwendig (beispielsweise um 45°).

Eine Weiterbildung der Erfindung ergibt sich aus Anspruch 2. Die dort erwähnten kerbenartigen Verrastausprägungen bilden gewissermaßen Hubeinrichtungen für die zugeordneten Riegelelemente und in der Montage-Drehendstellung und aufgrund ihrer in radialer Richtung verlaufenden Rastvertiefung dabei eine sichere Arretierung. Wegen dieser besonderen Ausbildung ist es an sich vorteilhaft, an einem entsprechenden Durchbruch der Karosserie einen separat gefertigten, die kerbenartigen Verrastausprägungen aufweisenden Halter zu befestigen, beispielsweise anzukleben oder anzuschweißen.

Im übrigen ist es sehr vorteilhaft, wenn man an der Außenseite der Bundbuchse eine Markierung anbringt, die es einerseits ermöglicht, den Riegel vor der Montage richtig auszurichten und andererseits von außen auch erkennen läßt, wann die Montageendstellung erreicht ist. Zweckmäßig ist hier eine Markierung mit "ON" sowie "OFF". Am Riegel selbst bzw. an dessen Betätigungsansatz muß eine entsprechende Gegenmarke vorgesehen sein. Man kann hierauf auch verzichten, wenn man die Ausbildung beispielsweise gemäß Anspruch 5 wählt.

Der Dämpfungskörper weist in an sich bekannter Weise ein hülsenförmige Gestalt auf und eine Ringnut, mit welcher er in eine entsprechende Bohrung des Befestigungsabschnittes der Scheibenwischerantriebseinrichtung eingesprengt werden kann. Darin ist er dann sowohl in vertikaler Richtung als auch bei entsprechender Dimensionierung in Drehrichtung sicher gehalten. Gemäß Anspruch 3 überragt er die Bundbuchse gegen die Karosserie bzw. den Halter hin, so daß bei einer axialen Pressung - bei der Montage - die Hülse den Halter bzw. die Karosserie nicht erreicht und somit die volle Elastizität erhalten bleibt.

Um die Befestigungsvorrichtung vormontieren zu können und dabei die Konstruktion so einfach wie möglich zu gestalten, wird eine weitere Ausgestaltung gemäß Anspruch 4 vorgeschlagen. Die dort erwähnten Längsschlitze durchsetzen selbstverständlich nur den rohrförmigen Teil der Bundbuchse, und sie reichen dabei bis etwa an den inneren Bereich des Bundes dieser Buchse. Natürlich könnte die Bundbuchse anstelle der Längsschlitze auch mit radialen Ausprägungen für den Durchtritt der Rastelemente des Riegels ausgebildet sein.

Die Erfindung mit ihren weiteren Ausgestaltungen, Vorteilen und Wirkungsweisen wird nachstehend anhand der Zeichnung näher erläutert. Die Zeichnung zeigt ein Ausführungsbeispiel der Erfindung. Hierbei stellen dar:
- Figur 1: einen Längsmittelschnitt durch die an einer Karosserie oder an einem damit verbundenen Halter anmontierte Befestigungsvorrichtung in ihrer Montageendstellung;
- Figur 2: eine Ansicht der Figur 1 in Pfeilrichtung A gesehen; und
- Figur 3: eine Seitenansicht der Figur 2.

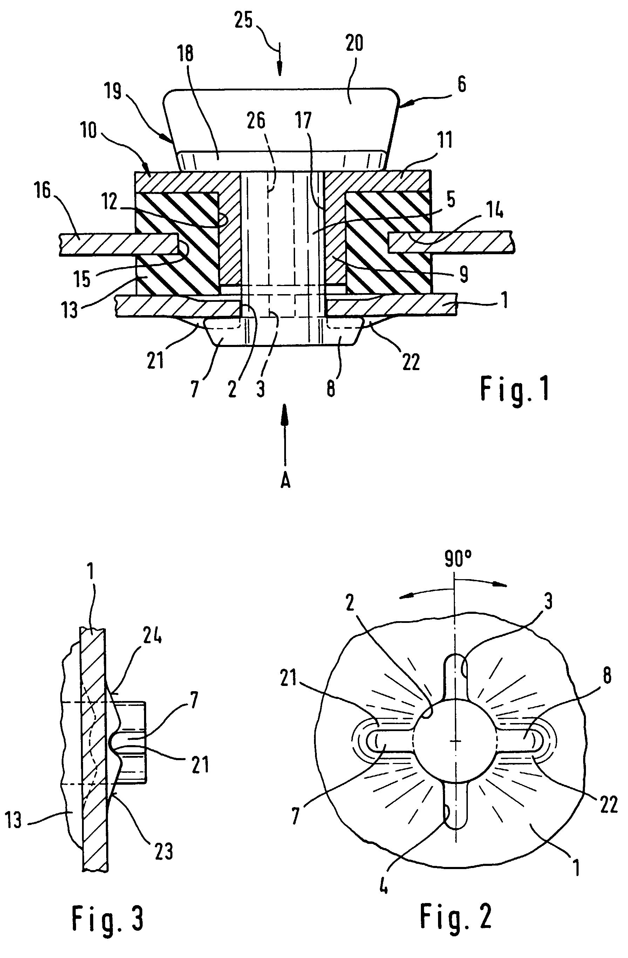

Eine vormontierte Scheibenwischerantriebseinrichtung beispielsweise der in der DE 40 36 367 A1 beschriebenen und dargestellten Art wird an drei Stellen einer Karosserie eines Kraftfahrzeugs oder dergleichen lösbar montiert. Hierzu dienen beim genannten Ausführungsbeispiel drei der erfindungsgemäßen Befestigungsvorrichtungen gemäß Figuren 1 bis 3.

An der nicht dargestellten Karosserie des Kraftfahrzeugs wird die vormontierte Scheibenwischerantriebseinrichtung mit Antriebsmotor, zwei Wischerwellen sowie einem Kurbelantrieb und einem Koppelgestänge an drei vorgegebenen Punkten der Karosserie befestigt. An jedem dieser Punkte befindet sich ein Halter 1, der entweder angeklebt oder punktgeschweißt ist. Wenn man die Karosserie im Bereich der Befestigungsstellen entsprechend dem Halter 1 ausbildet, so kann auf letzteren auch verzichtet werden.

Der Halter 1 bzw. der entsprechende Karosserieteil ist mit einem Durchbruch 2 ausgestattet, wobei es sich beim Ausführungsbeispiel um eine kreisrunde Bohrung handelt. In diese Bohrung münden zwei um 180° gegeneinander versetzte radiale Durchtrittsschlitze 3, 4, deren Bedeutung nachstehend noch erläutert wird. Es entsteht insgesamt die Gestalt eines Schlüssellochs für einen Schlüssel mit einem doppelten Bart.

Der Durchmesser des Durchbruchs 2 entspricht etwa demjenigen des Schafts 5 eines einen drehbaren Riegel darstellenden Befestigungselements 6. Am in Figur 1 unteren Ende des Schafts 5 sind zwei radial vorstehende, um 180° versetzte Riegelelemente 7 und 8 angeformt. Ihre Form und Dimensionierung ist so gewählt, daß sie in einer gegenüber Figur 2 um 90° gedrehten Stellung des Befestigungselements 6 durch die radialen Durchtrittsschlitze 3 und 4 hindurchtreten können.

Der Schaft 5 des Befestigungselements 6 durchsetzt den hülsenförmigen Teil 9 einer metallenen Bundbuchse 10. Der Bund ist mit 11 bezeichnet.

Die Bundbuchse 10 steckt in der Bohrung 12 eines Dämpfungskörpers 13, der aus Gummi, elastischem Kunststoff oder dergleichen elastischem Material gefertigt ist. Er hat im wesentlichen eine rohrförmige Gestalt, und an seiner Außenseite ist etwa mittig eine Ringnut 14 angebracht. Sie dient zum einsprengenden Festhalten in der Bohrung 15 eines Befestigungsabschnittes 16 der Wischanlage. Dieser Befestigungsabschnitt kann beispielsweise im Bereich einer Wischerwelle an einem Lagerkörper für letztere angeformt oder angebracht sein, wie dies genannte DE 40 36 367 A1 zeigt.

Der Schaft 5 des Befestigungselements 6 durchsetzt, wie Figur 1 zeigt, nicht nur den Durchbruch 2 des Halters 1 bzw. ein entsprechendes Karosserieteil, sondern auch die Bohrung 17 der Bundbuchse 10. Oben auf dem Bund 11 stützt sich das Befestigungselement 6 mit einem kreisscheibenförmigen Bund 18 ab, der ein Bestandteil des Betätigungsansatzes 19 ist. Zu letzterem gehört auch noch die senkrecht vom Bund 18 nach oben vorstehende knebelartige Handhabe 20. Letztere ermöglicht ein Drehen des gesamten Betätigungselements 6 in der Bohrung 17 der Bundbuchse 10 im Sinne der in Figur 2 eingezeichneten Pfeile und zwar beim Ausführungsbeispiel nach links oder rechts.

Am Halter 1 oder bei Verzicht auf einen solchen an der Karosserie sind beim Ausführungsbeispiel zwei um 180° versetzte, von der Bundbuchse 10 wegweisende kerbenartige Verrastausprägungen 21 und 22 ausgeformt. Sie nehmen in der Montageendstellung der erfindungsgemäßen Befestigungsvorrichtung nach einer 90°-Drehung jeweils eines der Riegelelemente 7 bzw. 8 auf (Figur 1). Figur 3 entnimmt man, daß sich in Drehrichtung gesehen, vor und hinter jeder Verrastausprägung eine ansteigende (in Montagerichtung gesehen) bzw. abfallende (in Demontagerichtung gesehen) Schrägfläche 23 bzw. 24 befindet. Diese Schrägflächen dienen zur axialen Spannung des Dämpfungskörpers 13 beim Drehen des Befestigungselements 6 in Verriegelungsrichtung. Dies gewährleistet nicht nur das rüttelfeste Halten der vormontierten Scheibenwischerantriebseinrichtung an der Karosserie, vielmehr wird dadurch auch die notwendige Zugkraft erzeugt, mit welcher die Riegelelemente 7 und 8 in die Verrastausprägungen 21 und 22 gezogen werden.

Damit man das Befestigungselement 6 überhaupt im Sinne des Pfeils 25 durch die Bundbuchse 10 hindurchschieben kann, muß man wegen der radial vorstehenden Riegelelemente 7 und 8 Längsschlitze 26 am hülsenförmigen Teil 9 der Bundbuchse 10 anbringen. Bei den gegebenen Abmessungen durchsetzen diese radialen, um 180° versetzten Längsschlitze 26 die gesamte Wandung des hülsenförmigen Teils 9. Die Längsschlitze 26 stehen in Verlängerung der radialen Durchtrittsschlitze 3 bzw. 4.

### Bezugszeichenliste

- 1: Halter
- 2: Durchbruch
- 3: Durchtrittsschlitz
- 4: Durchtrittsschlitz
- 5: Schaft
- 6: Befestigungselement
- 7: Riegelelement
- 8: Riegelelement
- 9: (hülsenförmiges) Teil
- 10: Bundbuchse
- 11: Bund
- 12: Bohrung
- 13: Dämpfungskörper
- 14: Ringnut
- 15: Bohrung
- 16: Befestigungsabschnitt
- 17: Bohrung
- 18: Bund
- 19: Betätigungsansatz
- 20: Handhabe
- 21: Verrastausprägung
- 22: Verrastausprägung
- 23: Schrägfläche
- 24: Schrägfläche
- 25: Pfeil
- 26: Längsschlitz

## Patentansprüche

1. Befestigungsvorrichtung für eine Wischanlage, insbesondere eines Kraftfahrzeugs, wobei ein Durchbruch (15) in einem Befestigungsabschnitt (16) der Wischanlage einen elastischen Dämpfungskörper (13) aufnimmt, in dessen Bohrung (12) eine Bundbuchse (10) eingesteckt ist, und an einem Karosserieteil ein Durchbruch (2) zum Befestigen der Wischanlage vorhanden ist, wobei weiterhin ein betätigbares Befestigungselement (6) der Befestigungsvorrichtung den Durchbruch (2) des Karosserieteils und die Bohrung (17) der Bundbuchse (10) durchsetzt und in seiner wirksamen Stellung die Wischanlage am Karosserieteil fixiert, **dadurch gekennzeichnet**, daß das Befestigungselement (6) ein drehbarer Riegel mit, vorzugsweise zwei, radial abstehenden Riegelelementen (7, 8) ist, die in der wirksamen Stellung das Karosserieteil untergreifen, wobei in den Durchbruch (2) des Karosserieteils radiale Durchtrittsschlitze (3, 4) für die Riegelelemente (7, 8) münden, und daß bei montierter Befestigungsvorrichtung ein Betätigungsansatz (19) des Befestigungselements (6) in der Montageendstellung an die freie Fläche des Bundes (11) der Bundbuchse (10) federelastisch angedrückt ist.

2. Vorrichtung nach Anspruch 1, wobei das Befestigungselement (6) zwei diametral angeordnete Riegelelemente (7, 8) aufweist, **dadurch gekennzeichnet**, daß das bzw. der Karosserieteil oder ein daran befestigter, den Durchbruch (2) aufweisender Halter (1), vorzugsweise zwei um 180° versetzte, von der Bundbuchse (10) wegweisende kerbenartige Verrastausprägungen (21, 22) für jeweils ein Riegelelement (7, 8) aufweist, die gegenüber den radialen Durchtrittsschlitzen (3, 4) des Karosserie-oder Halter-Durchbruchs (2) versetzt sind, vorzugsweise um 90°.

3. Vorrichtung nach Anspruch 1 oder 2, **dadurch gekennzeichnet**, daß der Dämpfungskörper (13) eine hülsenförmige Gestalt aufweist, mit an seiner Außenwandung angebrachter Ringnut (14) zum Einsprengen in die Bohrung (15) des Befestigungsabschnittes (16) der Wischanlage, und daß der Dämpfungskörper (13) die Bundbuchse (10) in Längsrichtung etwas überragt.

4. Vorrichtung nach wenigstens einem der Ansprüche 1 bis 3, **dadurch gekennzeichnet**, daß die Bundbuchse (10) Längsschlitze (26) für das Durchschieben der Riegelelemente (7, 8) aufweist, wobei die Längsschlitze (26) vorzugsweise die gesamte Buchse (10) radial durchsetzen.

5. Vorrichtung nach wenigstens einem der Ansprüche 1 bis 4, **dadurch gekennzeichnet**, daß der Betätigungsansatz (19) des Befestigungselements (6) einen kreisscheibenförmigen Bund (18) aufweist, der sich außen auf dem Bund (11) der Bundbuchse (10) abstützt, und daß der Bund (18) des Betätigungsansatzes (19) eine knebelartige Handhabe (20) trägt.
